# EUROPEAN PATENT SPECIFICATION

(11) **EP 3 717 787 B1**
(45) Date of publication and mention of the grant of the patent: **22.06.2022**
(21) Application number: 18827235.5
(22) Date of filing: 29.11.2018
(51) Int. Cl.: F16B 7/10, F16B 45/00, B62K 19/40, B62J 7/08, B62J 11/00

(54) **BAG CARRYING DEVICE FOR A MOTOR VEHICLE AND MOTOR VEHICLE COMPRISING SAID BAG CARRYING DEVICE**
TASCHENTRAGEVORRICHTUNG FÜR EIN KRAFTFAHRZEUG UND KRAFTFAHRZEUG MIT DER TASCHENTRAGEVORRICHTUNG
DISPOSITIF DE TRANSPORT DE SAC POUR UN VÉHICULE À MOTEUR ET VÉHICULE À MOTEUR COMPRENANT LEDIT DISPOSITIF DE TRANSPORT DE SAC

(30) Priority: 29.11.2017 IT 201700137149
(43) Date of publication of application: 07.10.2020
(73) Proprietor: PIAGGIO & C. S.p.A., 56025 Pontedera (Pisa) (IT)
(72) Inventor: SANTUCCI, Mario, 56025 Pontedera (Pisa) (IT); MARIOTTI, Valentino, 56025 Pontedera (Pisa) (IT)
(74) Representative: Carangelo, Pierluigi
(86) International application number: PCT/IB2018/059442
(87) International publication number: WO 2019/106589

(56) References cited:
- WO-A1-2008/101543
- WO-A2-2008/010193
- CN-A- 101 497 358
- DE-A1- 3 537 145
- DE-A1-102015 211 295
- US-A1- 2002 104 937
- US-A1- 2007 012 842
- US-A1- 2007 205 346

## Description

The present description relates to the technical field of bag carrying devices for motor vehicles and more specifically, it relates to a bag carrying device as defined in the preamble to claim 1.

The bag carrying hook is a classic and very useful piece of equipment of motor vehicles, such as for example mopeds and scooters in general. The position of the bag carrying hook often is affected by the aspect of the vehicle, but it is usually positioned as high as possible in the part of the vehicle facing the floorboardso as to make it adapted to also hook long bag handles.

One drawback of the above-described bag carrying hooks of the known art is associated with the fact that short bags may not be rested on the floorboarddue to the arrangement of the bag carrying hook and they therefore only remain hanging and may swing with the movement of the vehicle. Such swinging may cause objects to come out of the bag in case of open bags not provided with elements for closing the bag. Moreover, the aforesaid swinging may get in the way of the driver during driving and/or the releasing of the bag from the hook itself, thus increasing the risk of accidents. The document US 2002/104937 A1 shows a hanger in accordance with the prior art.

It is a general object of the present description to make available a bag carrying device for a motor vehicle which is capable of obviating or at least partly reducing the above-mentioned drawbacks with reference to the known art.

In particular, one object of the present description is the one of making available a bag carrying device for a motor vehicle which allows stably accommodating bags having various sizes or having handles with different lengths.

Such objects are achieved by means of a bag carrying device for a motor vehicle as defined and characterized in appended claim 1 in the most general embodiment thereof, and in the dependent claims in certain particular embodiments thereof.

A motor vehicle as defined in claim 5 is also the object of the present invention.

The invention will be better comprehended from the following detailed description of embodiments thereof, given by way of example and therefore non-limiting in relation to the accompanying drawings, in which:
Fig. 1 is a side plan view of a motor vehicle provided with a bag carrying device comprising a hooking member for a bag according to a first embodiment of the present invention, the bag carrying device being depicted in a first operating configuration;
Fig. 2 is a side plan view of the motor vehicle in Fig. 1, in which the bag carrying device is depicted in a second configuration;

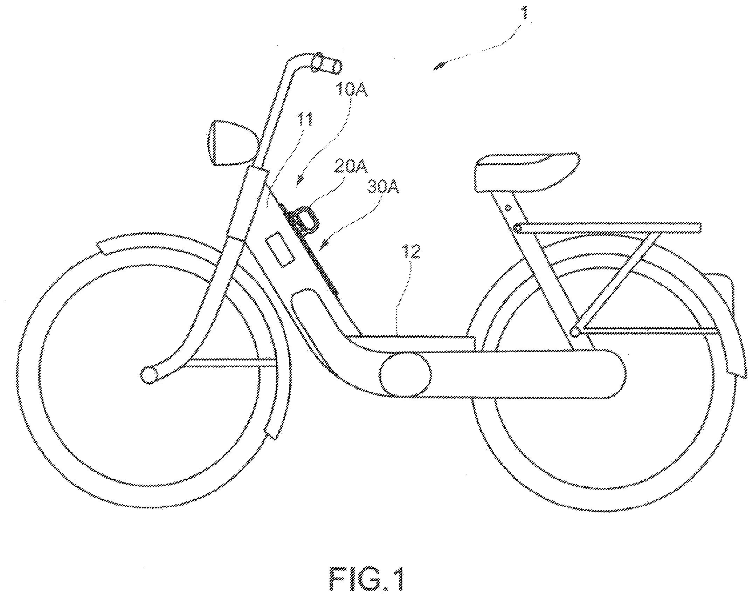

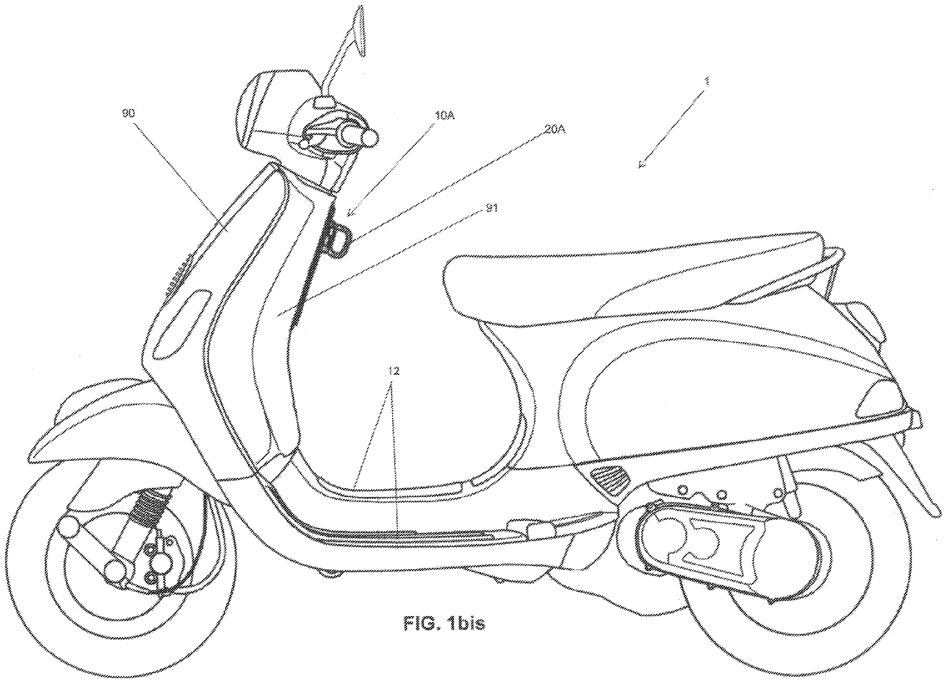

Fig. 1bis is a side plan view of an alternative motor vehicle to that shown in Fig. 1, provided with the bag carrying device in Fig. 1, the bag carrying device being depicted in a first operating configuration;

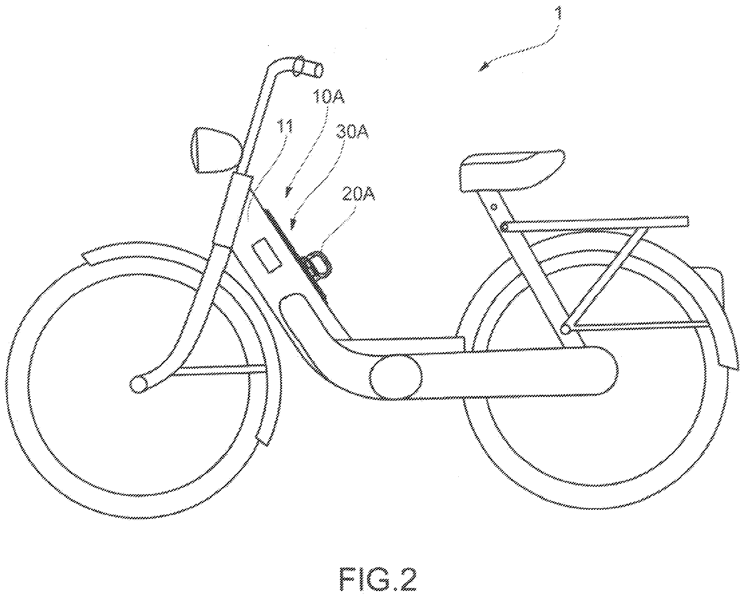

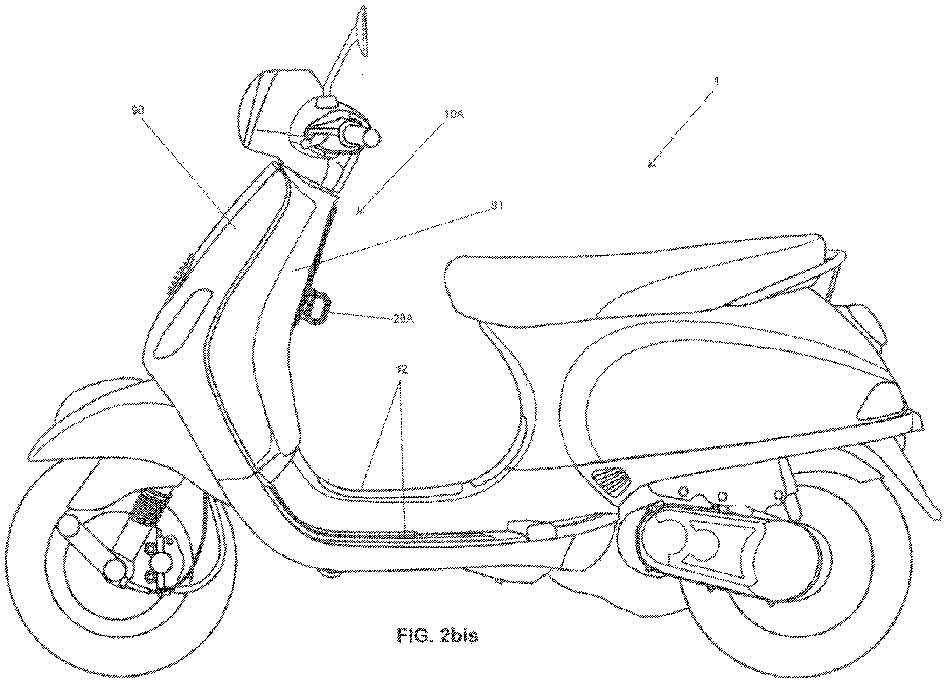

Fig. 2bis is a side plan view of the motor vehicle in Fig. 1bis, in which the bag carrying device is depicted in a second configuration;

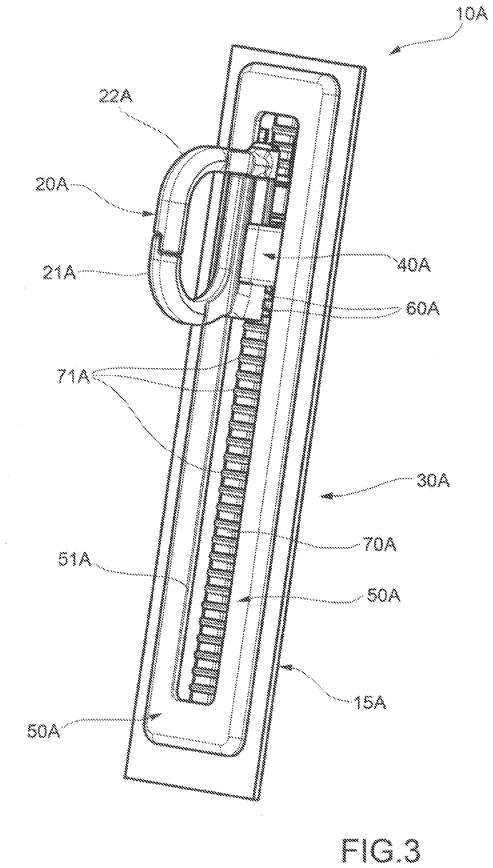

Fig. 3 is a perspective view of the front side of the bag carrying device in Fig. 1 or in Fig. 1bis;

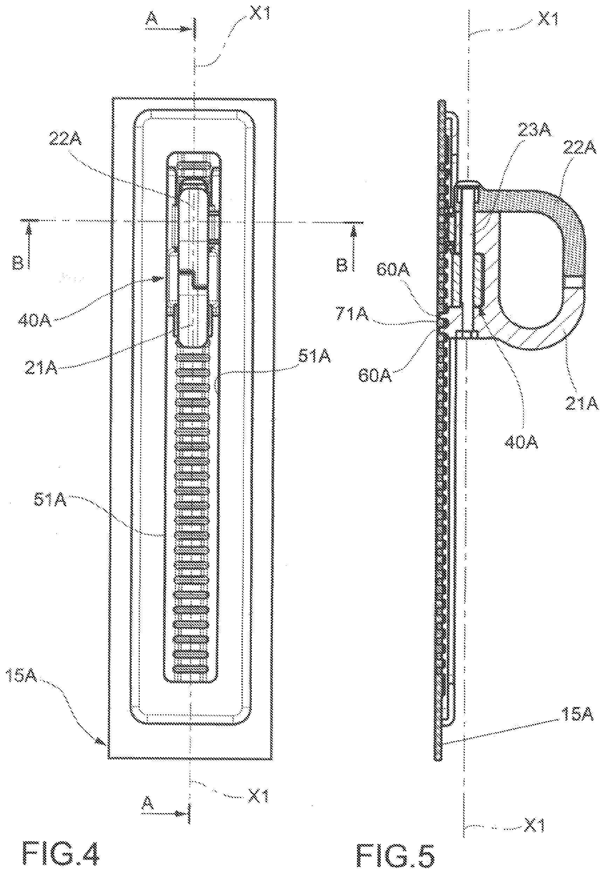

Fig. 4 is a front plan view of the bag carrying device in Fig. 1 or in Fig. 1bis;
Fig. 5 is a sectional plan view along the line A-A in Fig. 4;

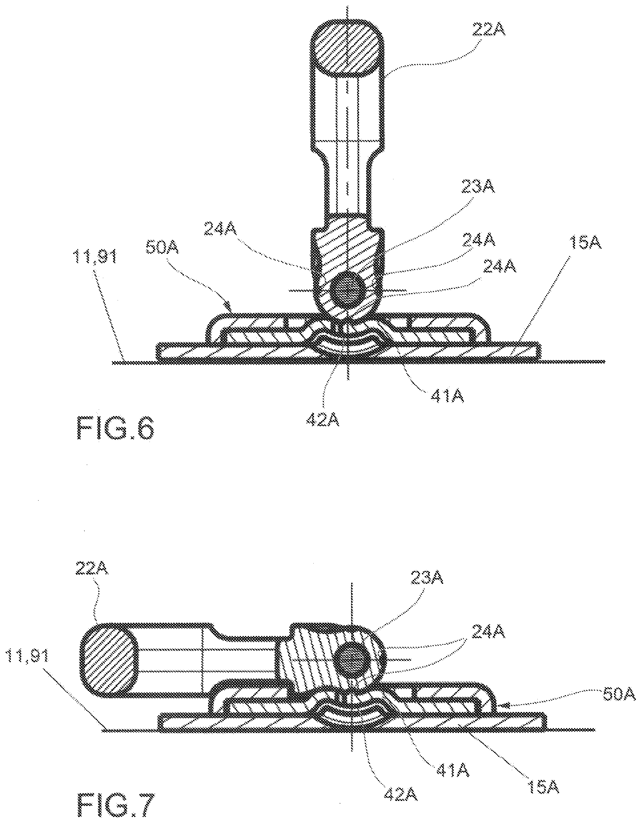

Fig. 6 is a partial sectional plan view along the line B-B in Fig. 4 in which a part of the motor vehicle in Fig. 1 or in Fig. 1bis is also diagrammatically depicted;
Fig. 7 is a partial sectional plan view similar to Fig. 6 in which the hooking member is depicted in a different angular position with respect to Fig. 6;

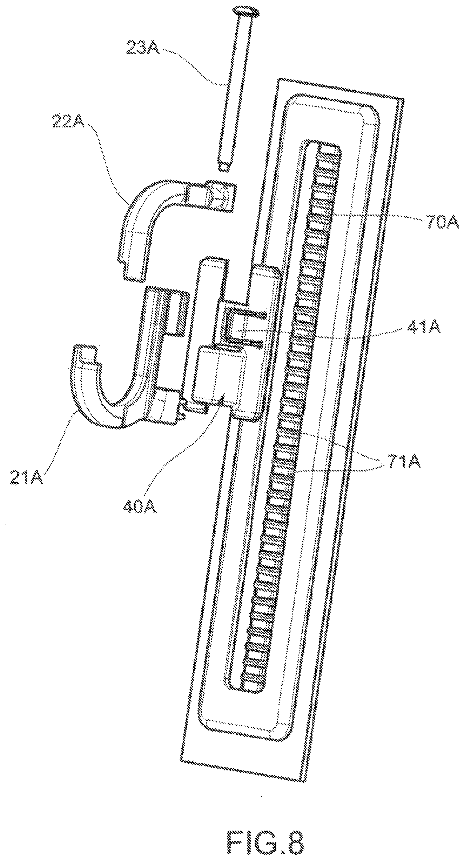

Fig. 8 is an exploded perspective view from the front side of the bag carrying device in Fig. 1;

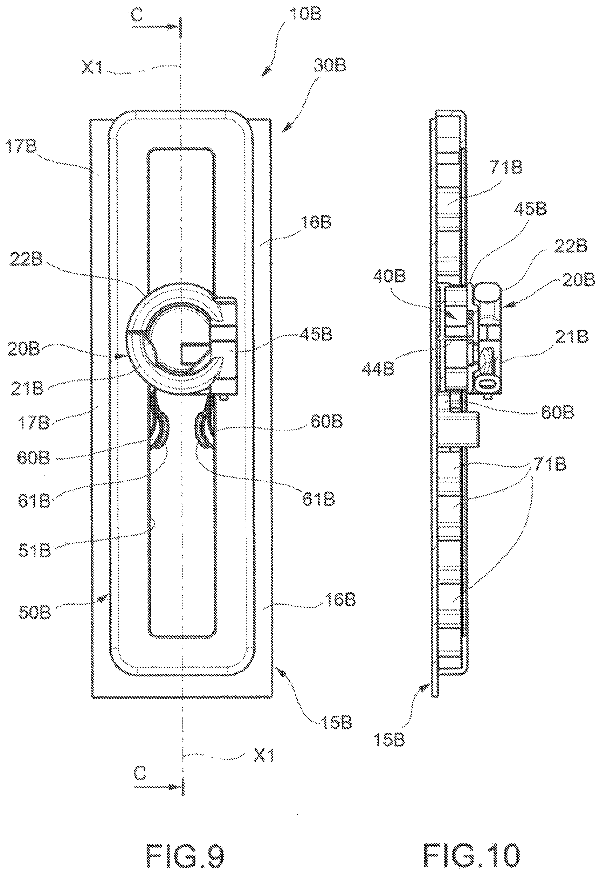

Fig. 9 is a front plan view of the bag carrying device for a motor vehicle according to a second embodiment;
Fig. 10 is a sectional plan view along the line C-C in Fig. 9;

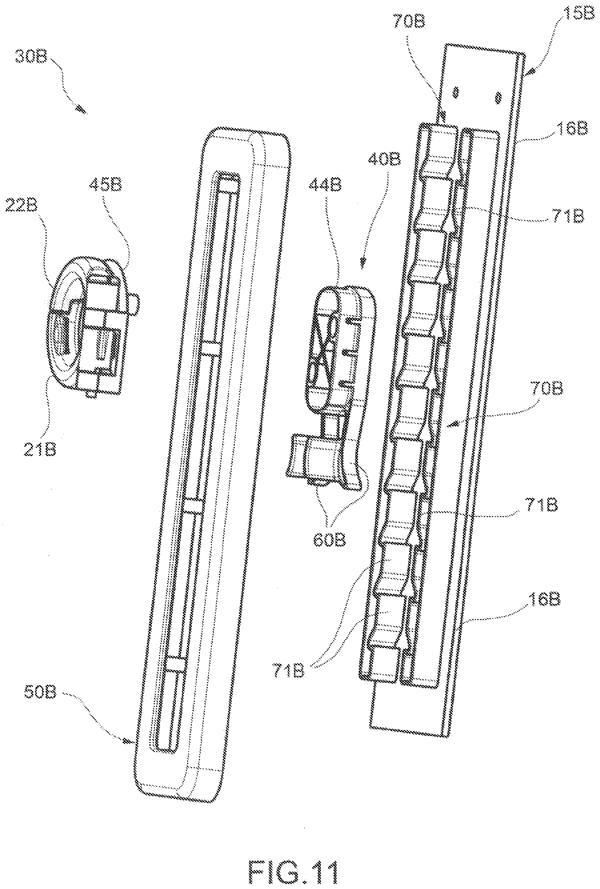

Fig. 11 is an exploded perspective view from the front side of the bag carrying device in Fig. 9;

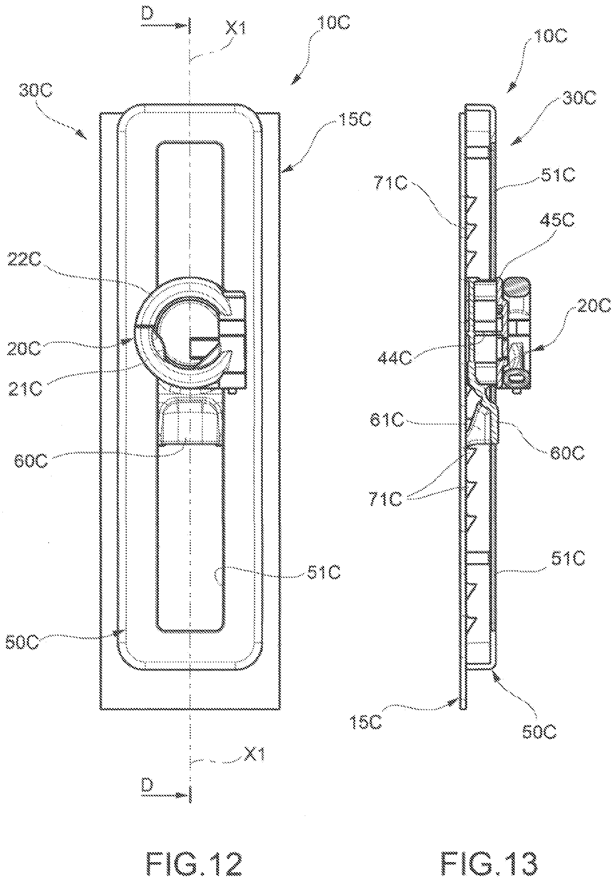

Fig. 12 is a front plan view of the bag carrying device for a motor vehicle according to a third embodiment;
Fig. 13 is a sectional plan view along the line D-D in Fig. 12;

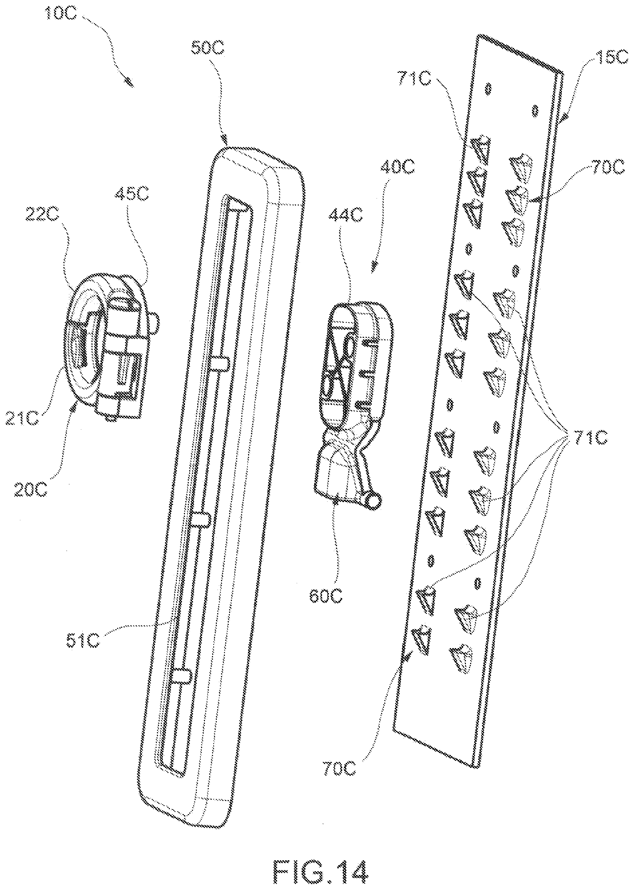

Fig. 14 is an exploded perspective view from the front side of the bag carrying device in Fig. 12;

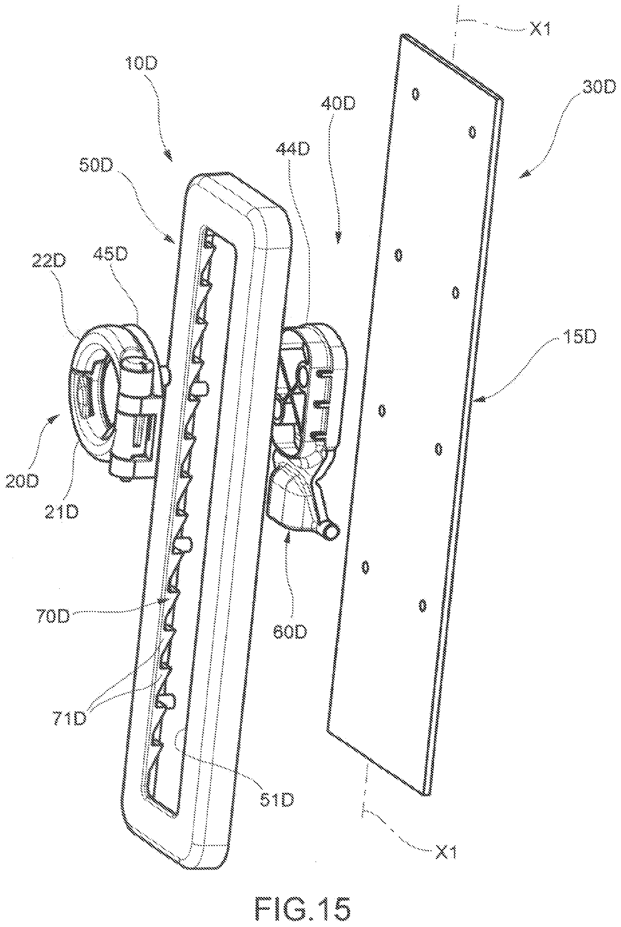

Fig. 15 is an exploded perspective view of the front side of a bag carrying device for a motor vehicle according to a fourth embodiment;

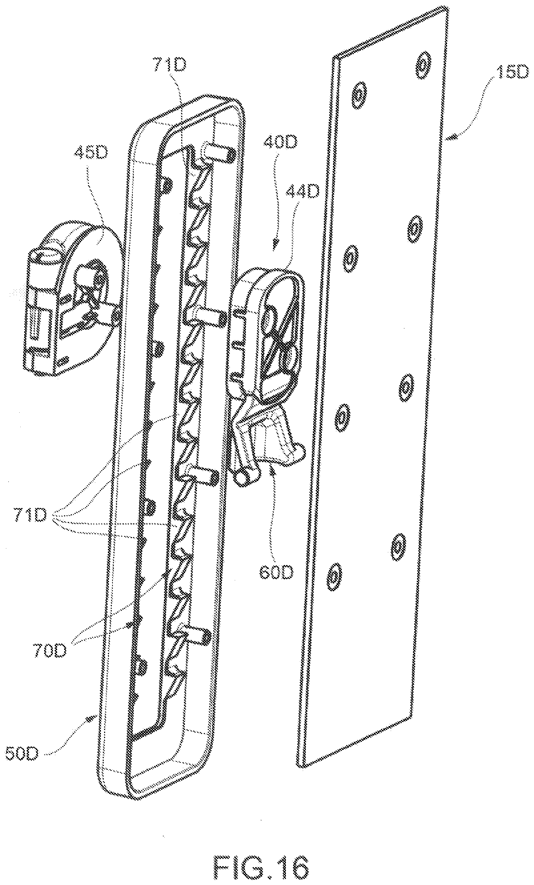

Fig. 16 is an exploded perspective view from the rear side of the bag carrying device in Fig. 15;

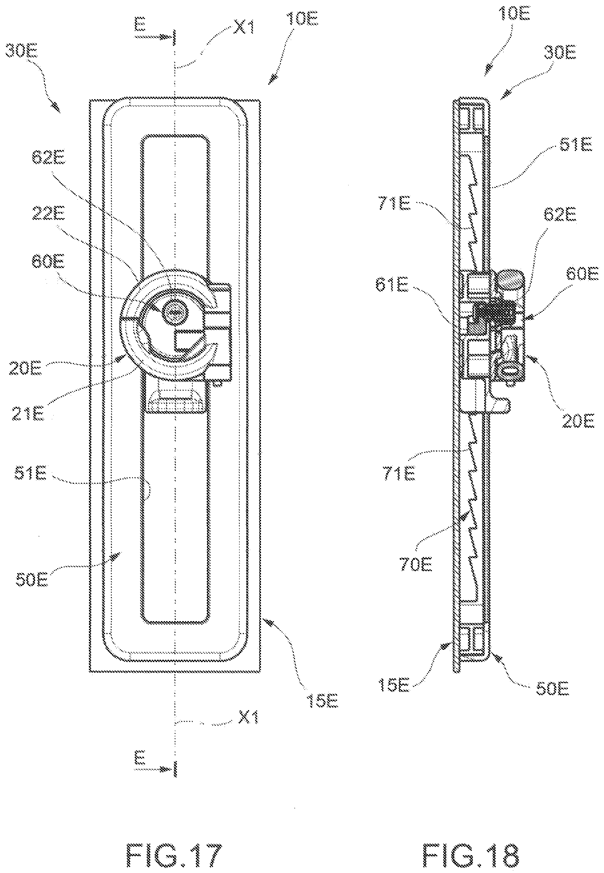

Fig. 17 is a front plan view of the bag carrying device for a motor vehicle according to a fifth embodiment;
Fig. 18 is a sectional plan view along the line E-E in Fig. 17;

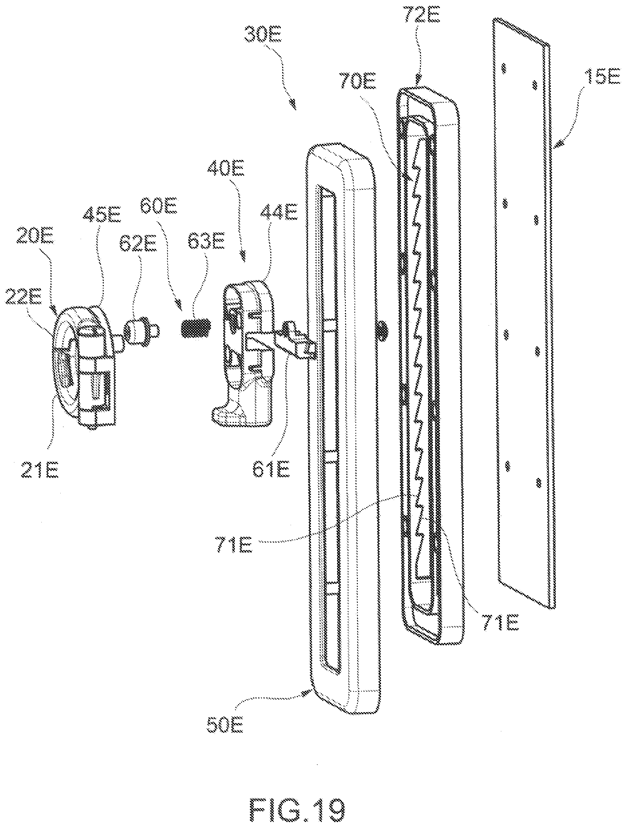

Fig. 19 is an exploded perspective view from the front side of the bag carrying device in Fig. 17.

With initial reference to figures 1 to 2, a motor vehicle 1 comprising a bag carrying device 10A according to a first preferred embodiment is indicated as a whole with numeral 1. In the example in Fig. 1, the motor vehicle preferably is a moped 1. However, it is worth noting that the teachings of the present description are not limited to a moped 1 but in general are applicable to any type of motor vehicle, such as for example, a motor scooter, ATV (All-Terrain Vehicle), etc. In the version depicted in Figures 1bis and 2bis, the motor vehicle 1 is a scooter 1, which is provided with the bag carrying device 10A.

With reference to Figures 3 to 8, the bag carrying device 10A comprises a hooking member 20A for a bag. In particular, the hooking member 20A allows hooking a bag (not depicted) to be transported with moped 1, preferably by means of the strap or a handle of the bag itself. The hooking member 20A preferably comprises a first hook portion 21A to allow hooking a bag to the hooking member 20A and a second safety portion 22A to avoid the bag from slipping off the first portion 21A. In particular, the portions 21A, 22A are adapted to assume a configuration in which they form a closed loop and they are relatively movable with respect to each other so as to allow opening the closed loop and hooking a bag to the hook portion 21A. The bag carrying device 10A further comprises coupling elements 30A adapted to be operatively interposed between the hooking member 20A and a part 11 of the motor vehicle 1, for coupling the hooking member 20A to part 11 of the motor vehicle 1. Preferably, such a part 11 of the motor vehicle 1 is a part of the motor vehicle 1 which faces or is adjacent to a bearing plane 12 of the motor vehicle 1. The bearing plane is preferably arranged below the hooking member 20A. The bearing plane 12 is preferably configured to accommodate the driver's feet when the motor vehicle 1 is in use. In other words, the bearing plane 12 comprises the floorboard 12 for resting the driver's feet. In the example in Figures 1 and 2, part 11 is a part of the so-called "middle tunnel" of moped 1. In the example in Figures 1bis and 2bis, the coupling elements 30A are adapted to be operatively interposed between the hooking member 20A and a part 91 of scooter 1 in order to couple the hooking member 20A to part 91 of the motor vehicle 1. Such a part 91 preferably is the counter-shield 91 of scooter 1. In the example in Figures 1bis and 2bis, the floorboard 12 for resting the feet forms the aforesaid bearing plane 12, and thereby a bag may be hung on the hooking member 20A and it may be adjusted in height so that the bottom of the bag rests on said floorboard 12 and the lateral movements of the bag may be retained by the driver's feet without further retaining systems. As mentioned above, in the version shown in Figures 1bis and 2bis, the motor vehicle 1 is a scooter 1 and the bag is also protected from bad weather or from the wind generated by the advancement of vehicle 1 by means of the shield 90 of scooter 1, indeed the bag carrying device 10A is arranged on the counter-shield 91 of scooter 1, that is on the back side of the protective shield 90 of scooter 1. Said part 11, 91 of the motor vehicle or scooter 1 (looking at vehicle 1 from the side in erected position) on which the bag carrying device 10A is attached, is substantially vertical, that is vertical to the ground or tilted up to +/-45° with respect to the vertical of the ground. Conveniently, the coupling elements 30A are configured so as to allow a position of the hooking member 20A to be regulated, so that the hooking member 20A can assume at least two different positions situated at different heights with respect to a bearing plane 12 of moped 1. For example, the hooking member 20A in Fig. 1 is shown in a first position situated at a relatively higher height with respect to the bearing plane 12, while the hooking member 20A in Fig. 2 is shown in a second position situated at a relatively lower height with respect to the bearing plane 12.

The coupling elements 30A comprise guide elements 40A, 50A configured to guide the hooking member 20A between said at least two different positions, and blocking elements 60A, 70A configured so as to prevent the hooking member 20A from moving between said at least two different positions when the hooking member 20A assumes any one of such at least two different positions. The guide elements 40A, 50A are configured to guide the hooking member 20A between a plurality of different positions at different heights with respect to the bearing plane 12, and the blocking elements 60A, 70A are configured so as to prevent the hooking member 20A from moving between the plurality of different positions when the hooking member 20A assumes any one position of the aforesaid plurality of different positions. The guide elements 40A, 50A are configured so as to guide the hooking member 20A along a sliding axis X1. The coupling elements 30A comprise a mounting base 15A configured to be fastened to part 11 or 91 of the motor vehicle 1 by way of non-limiting example by means of fastening screws (not depicted).

The guide elements 40A, 50A comprise a cursor 40A, coupled to which is the hooking member 20A, and a retaining member 50A coupled to said mounting base 15A so as to retain cursor 40A between the retaining member 50A and the mounting base 15A and so as to define a sliding guide to guide the sliding of cursor 40A along the sliding axis X1. The retaining member 50A preferably is provided with a longitudinal opening 51A extended in the direction of the sliding axis X1 to allow the hooking member 20A to slide in the direction of said sliding axis X1. The blocking elements 60A, 70A comprise first blocking elements 60A associated with the hooking member 20A and second blocking elements 70A conjugated with the first blocking elements 60A. The second blocking elements 70A are interposed between the retaining member 50A and the mounting base 15A. The second blocking elements 70A comprise at least one row 70A of blocking teeth 71A associated with the mounting base 15A. The blocking teeth 71A protrude from the mounting base 15A towards the retaining member 50A. The first blocking elements 60A comprise at least one protruding blocking element 60A which protrudes from the hooking member 20A. The first blocking elements 60A preferably comprise a pair of protruding blocking elements 60A. According to a preferred embodiment, the aforesaid at least one protruding blocking element 60A and said at least one row 70A of blocking teeth 71A are shaped so as to be complementary. The hooking member 20A is rotatably coupled to cursor 40A for example by means of a connection pin 23A, to rotate about a rotation axis parallel or coinciding with the sliding axis X1 so as to assume at least a first angular position (Fig. 7) and a second angular position (Figures 5 to 6). The at least one protruding blocking element 60A is disengaged from the row 70A of blocking teeth 71A in the first angular position (Fig. 7) so as to allow the hooking member 20A to slide along the sliding axis X1. The hooking member 20A is substantially parallel (Fig. 7) to the mounting base 15A in the first angular position so as not to hinder the movements of the driver on the motor vehicle 1 because it adheres to part 11, 91 of the motor vehicle 1. The at least one protruding blocking element 60A engages the row 70A of blocking teeth 71A in the second angular position (Figures 5 to 6) so as to prevent the hooking member 20A from sliding along the sliding axis X1. The hooking element 20A is substantially perpendicular (Fig. 6) to the mounting base 15A in the second angular position so as to facilitate the hooking of the bag to the hooking member 20A. As may be noted in the example in Fig. 5, when the hooking member 20A assumes the second angular position, one of the blocking teeth 71A is interposed between two protruding blocking elements 60A. Said two protruding blocking elements 60A are shaped so as to be complementary with the blocking teeth 71A (Fig. 5). According to a preferred embodiment, the bag carrying device 10A comprises a blocking system 24A, 41A, 42A (Figures 6 to 8) for selectively blocking the hooking member 20A at least in the first and in the second angular position. The blocking system 24A, 41A, 42A preferably comprises an elastically flexible blocking tab 41A associated with cursor 40A. The blocking tab 41A preferably is provided with a blocking projection 42A which, at least in the first and in the second angular position of the hooking member 20A, is adapted to engage corresponding blocking recesses 24A provided in the hooking member 20A for blocking the hooking member 20A in a releasing manner in the first and in the second angular position, respectively. The hooking member 20A in the example in particular is provided with three blocking projections 24 which allow the hooking member also to be blocked in a third angular position which is different from the first and the second angular position.

The structure of the bag carrying device 10A being described, an operating method of device 10A with reference to the embodiment shown in Figures 1 to 8 is now described by way of a non-limiting example.

Let's hypothesize that the hooking member 20A initially is in the configuration in Fig. 1, i.e. it assumes the second angular position and it is in the first position situated at the relatively higher height with respect to the bearing plane 12. The sliding of the hooking member 20A along the sliding axis X1 in Fig. 1 is prevented by the blocking elements 60A, 70A and in particular, by the protruding blocking elements 60A which engage the row 70A of blocking teeth 71A. Moreover, the hooking member 20A in the configuration in Fig. 1 is blocked in the second angular position due to the blocking system 24A, 41A, 42A. Now let's hypothesize that starting from the configuration in Fig. 1, there is the need to hook a bag to the hooking member 20A, the bag having a relatively short strap or handle with respect to the position of the hooking member 20A, which bag is resting on the bearing plane 12 of the motor vehicle 1. In order to allow hooking such a bag strap or handle to the hooking member 20A, the hooking member 20A may be rotated so as to assume the first angular position, in which the hooking member 20A is blocked again by means of the blocking system 24A, 41A, 42A and is free to slide along the sliding axis X1 because the protruding blocking elements 60A are disengaged from the row 70A of blocking teeth 71A. At this point, the height of the hooking member may be regulated by sliding such a member along axis X1. Once the desired position for the hooking member 20A is reached, i.e. the second position in Fig. 2 or an intermediate position situated at an intermediate height with respect to the heights of the positions of the hooking member 20A in Fig. 1 and Fig. 2, the sliding of the hooking member 20A may be blocked again by rotating the hooking member 20A so that it assumes the second angular position, in which it is blocked by means of the blocking system 24A, 41A, 42A.

With reference now to Figures 9 to 11, a bag carrying device for the motor vehicle 1 according to a second embodiment is indicated as a whole in such drawings with numeral 10B. The bag carrying device 10B comprises a hooking member 20B for a bag and coupling elements 30B adapted to be operatively interposed between the hooking member 20B and part 11 of the motor vehicle 1, for coupling the hooking member 20B to part 11 of the motor vehicle 1. According to a preferred embodiment, the hooking member 20B comprises a first hook portion 21B to allow hooking a bag to the hooking member 20B and a second safety portion 22B to avoid the bag from slipping off of the first portion 21B. Although they have a slightly different shape with respect to the portions 21A, 22A of the hooking member 20A, similarly to the portions 21A, 22a, the portions 21B, 22B are adapted to assume a configuration in which they form a closed loop and they are relatively movable with respect to each other so as to allow opening the closed loop and hooking a bag to the hook portion 21B. The coupling elements 30B are configured so as to allow a position of the hooking member 20B to be regulated, so that the hooking member 20B can assume at least two different positions situated at different heights with respect to a bearing plane 12 of the motor vehicle 1. The coupling elements 30B comprise guide elements 40B, 50B configured to guide the hooking member 20B between said at least two different positions, and blocking elements 60B, 70B configured so as to prevent the hooking member 20B from moving between the aforesaid at least two different positions when the hooking member 20B assumes any one of such at least two different positions. The guide elements 40B, 50B are configured to guide the hooking member 20B between a plurality of different positions at different heights with respect to the bearing plane 12, and the blocking elements 60B, 70B are configured so as to prevent the hooking member 20B from moving between the different positions of the aforesaid plurality of different positions when the hooking member 20B assumes any one position of such positions. The guide elements 40B, 50B preferably are configured so as to guide the hooking member 20B along a sliding axis X1. The coupling elements 30B comprise a mounting base 15B configured to be fastened to part 11 of the motor vehicle 1. According to one embodiment, the guide elements 40B, 50B comprise a cursor 40B, coupled to which is the hooking member 20B, and a retaining member 50B coupled to said mounting base 15B so as to retain cursor 40B between the retaining member 50B and the mounting base 15B and so as to define a sliding guide to guide the sliding of cursor 40B along the sliding axis X1. According to one embodiment, the hooking member 20B is rotatably coupled to cursor 40B to rotate about a rotation axis parallel or coinciding with the sliding axis X1 so as to assume at least a first angular position and a second angular position. In such case, the bag carrying device 10B preferably comprises a blocking system which is identical or substantially identical to the blocking system 24A, 41A, 42A of device 10A for selectively blocking the hooking member 20B at least in the first and in the second angular position. Cursor 40B preferably comprises a first portion 44B of cursor and a second portion 45B of cursor which are coupled to each other, for example screwed to each other, between which the retaining member 50B is interposed. According to one embodiment, the retaining member 50B is provided with a longitudinal opening 51B extended in the direction of the sliding axis X1 to allow the hooking member 20B to slide in the direction of said sliding axis X1. According to one embodiment, the blocking elements 60B, 70B comprise first blocking elements 60B associated with cursor 40B and second blocking elements 70B conjugated with the first blocking elements 60B. The second blocking elements 70B are interposed between the retaining member 50B and the mounting base 15B. According to one embodiment, the first blocking elements 60B comprise at least one elastically flexible blocking arm 60B connected to cursor 40B and the second blocking elements 70B comprise at least one row 70B of blocking teeth 71B interposed between the retaining member 50B and the mounting base 15B. The blocking teeth 71B of such at least one row 70B protrude laterally from a longitudinal edge portion 16B of the mounting base 15B towards a central axis of the mounting base 15B. Such a central axis of the mounting base 15B in the example coincides with or is parallel to the sliding axis X1 of cursor 40B. The aforesaid at least one blocking arm 60B is configured so as to engage said at least one row 70B of blocking teeth 71B to block the sliding of cursor 40B and so as to be disengaged from such at least one row 70B of blocking teeth 71B, thus elastically deforming the at least one blocking arm 60B so as to distance it from the at least one row 70B of blocking teeth 71B, and to allow the sliding of cursor 40B along the sliding axis X1. According to a preferred embodiment, the second blocking elements 70B comprise two mutually opposed rows 70B of blocking teeth 71B. The blocking teeth 71B of one of the two rows 70B protrude laterally from the longitudinal portion 16B towards the central axis of the mounting base 15B, while the blocking teeth 71B of the other of the two rows 70B protrude laterally towards the central axis of the mounting base 15B from a longitudinal edge portion 17B of the mounting base 15B which is opposite to the longitudinal portion 16B. In such a case, cursor 40B may be released, thus elastically deforming the two arms 60B towards the central axis of the mounting base 15B so as to disengage them from the blocking teeth 71B. Once released, i.e. once the arms 60B have been disengaged from the blocking teeth 71B, cursor 40B may be caused to slide along axis X1 and may be blocked again in the desired position by releasing the arms 60B so that the latter may engage the blocking teeth 71B. Gripping elements 61B, more preferably gripping elements 61B adapted to be gripped between two fingers of a hand, may preferably be associated with the blocking arms 60B to facilitate disengaging arms 60B from the blocking teeth 71B and control the sliding of cursor 40B along axis X1. In the case of the bag carrying device 10B, it is worth noting that unlike the bag carrying device 10A, cursor 40B may be blocked/released regardless of the angular position of the hooking member 20B.

With reference now to Figures 12 to 14, a bag carrying device for the motor vehicle 1 according to a third embodiment is indicated as a whole in such drawings with numeral 10C. The bag carrying device 10C comprises a hooking member 20C for a bag and coupling elements 30C adapted to be operatively interposed between the hooking member 20C and part 11 of the motor vehicle 1 for coupling the hooking member 20C to part 11 of the motor vehicle 1. According to a preferred embodiment, the hooking member 20C comprises a first hook portion 21C to allow hooking a bag to the hooking member 20C and a second safety portion 22C to avoid the bag from slipping off of the first portion 21C. The portions 21C, 22C, which have an identical or substantially identical shape with respect to the portions 21B, 22B of the hooking member 20B, similarly to the portions 21B, 22B, are adapted to assume a configuration in which they form a closed loop and they are relatively movable with respect to each other so as to allow opening the closed loop and hooking a bag to the hook portion 21C. The coupling elements 30C are configured so as to allow a position of the hooking member 20C to be regulated, so that the hooking member 20C can assume at least two different positions situated at different heights with respect to a bearing plane 12 of the motor vehicle 1. The coupling elements 30C comprise guide elements 40C, 50C configured to guide the hooking member 20B between said at least two different positions, and blocking elements 60B, 70B configured so as to prevent the hooking member 20B from moving between the aforesaid at least two different positions when the hooking member 20C assumes any one of such at least two different positions. According to a preferred embodiment, the guide elements 40C, 50C are configured to guide the hooking member 20C between a plurality of different positions at different heights with respect to the bearing plane 12, and the blocking elements 60C, 70C configured so as to prevent the hooking member 20C from moving between the different positions of the aforesaid plurality of different positions when the hooking member 20C assumes any one position of such positions. The guide elements 40C, 50C are configured so as to guide the hooking member 20C along a sliding axis X1. The coupling elements 30C comprise a mounting base 15C configured to be fastened to part 11 of the motor vehicle 1. According to one embodiment, the guide elements 40C, 50C comprise a cursor 40C, coupled to which is the hooking member 20C, and a retaining member 50C coupled to said mounting base 15C so as to retain cursor 40C between the retaining member 50C and the mounting base 15C and so as to define a sliding guide to guide the sliding of cursor 40C along the sliding axis X1. According to one embodiment, the hooking member 20C is rotatably coupled to cursor 40C to rotate about a rotation axis parallel or coinciding with the sliding axis X1 so as to assume at least a first angular position and a second angular position. In such case, the bag carrying device 10C preferably comprises a blocking system which is identical or substantially identical to the blocking system 24A, 41A, 42A of device 10A for selectively blocking the hooking member 20C at least in the first and in the second angular position. Cursor 40C preferably comprises a first portion 44C of cursor and a second portion 45C of cursor which are coupled to each other, for example screwed to each other, between which the retaining member 50C is interposed. According to one embodiment, the retaining member 50C is provided with a longitudinal opening 51C extended in the direction of the sliding axis X1 to allow the hooking member 20C to slide in the direction of said sliding axis X1. According to one embodiment, the blocking elements 60C, 70C comprise first blocking elements 60C associated with cursor 40C and second blocking elements 70C conjugated with the first blocking elements 60C. The second blocking elements 70C are interposed between the retaining member 50C and the mounting base 15C. According to one embodiment, the second blocking elements 70C comprise at least one row 70C of blocking teeth 71C associated with the mounting base 15C. The blocking teeth 71C of the at least one row 70C protrude from the mounting base 15C towards the retaining member 50C. The second blocking elements preferably comprise a pair of parallel rows 70C between which cursor 40C is adapted to slide. According to one embodiment, the first blocking elements 60C comprise a first blocking portion 60C which is elastically connected, and more preferably elastically hinged, to cursor 40C. The first blocking portion 60C is configured so as to engage the at least one row 70C of blocking teeth 71C to block the sliding of cursor 40C along the sliding axis X1. Moreover, the first blocking portion 60C is configured so as to be distanced from the at least one row 70C of blocking teeth 71C, contrasting an elastic reaction of the first blocking portion 60C to disengage such a blocking portion 60C from the at least one row 70C of blocking teeth 71C and to allow the sliding of said cursor 40C along the sliding axis X1. According to one embodiment, the blocking portion 60C has a recess 61C through which for example, a finger of a hand may be inserted to rotate portion 60C with respect to cursor 40C so as to disengage portion 60C from the blocking teeth 71C. Once released, i.e. once portion 60C has been disengaged from the blocking teeth 71C, cursor 40C may be caused to slide along axis X1 and may be blocked again in the desired position by releasing portion 60C so that the latter may engage the blocking teeth 71C again. In the case of the bag carrying device 10C, it is worth noting that unlike the bag carrying device 10A, cursor 40C may be blocked/released regardless of the angular position of the hooking member 20C.

With reference now to Figures 15 to 16, a bag carrying device for the motor vehicle 1 according to a fourth embodiment is indicated as a whole in such drawings with numeral 10D. The bag carrying device 10D comprises a hooking member 20D for a bag and coupling elements 30D adapted to be operatively interposed between the hooking member 20D and part 11 of the motor vehicle 1 for coupling the hooking member 20D to part 11 of the motor vehicle 1. According to a preferred embodiment, the hooking member 20D comprises a first hook portion 21D to allow hooking a bag to the hooking member 20D and a second safety portion 22D to avoid the bag from slipping off of the first portion 21D. The portions 21D, 22D, which have an identical or substantially identical shape with respect to the portions 21B, 22B of the hooking member 20B, similarly to the portions 21B, 22B, are adapted to assume a configuration in which they form a closed loop and they are relatively movable with respect to each other so as to allow opening the closed loop and hooking a bag to the hook portion 21D. The coupling elements 30D are configured so as to allow a position of the hooking member 20D to be regulated, so that the hooking member 20D can assume at least two different positions situated at different heights with respect to a bearing plane 12 of the motor vehicle 1. The coupling elements 30D comprise guide elements 40D, 50D configured to guide the hooking member 20D between said at least two different positions, and blocking elements 60D, 70D configured so as to prevent the hooking member 20D from moving between the aforesaid at least two different positions when the hooking member 20D assumes any one of such at least two different positions. The guide elements 40D, 50D are configured to guide the hooking member 20D between a plurality of different positions at different heights with respect to the bearing plane 12, and the blocking elements 60D, 70D configured so as to prevent the hooking member 20D from moving between the different positions of the aforesaid plurality of different positions when the hooking member 20D assumes any one position of such positions. The guide elements 40D, 50D are configured so as to guide the hooking member 20D along a sliding axis X1. The coupling elements 30D comprise a mounting base 15D configured to be fastened to part 11 of the motor vehicle 1. According to one embodiment, the guide elements 40D, 50D comprise a cursor 40D, coupled to which is the hooking member 20D, and a retaining member 50D coupled to said mounting base 15D so as to retain cursor 40D between the retaining member 50D and the mounting base 15D and so as to define a sliding guide to guide the sliding of cursor 40D along the sliding axis X1. According to one embodiment, the hooking member 20D is rotatably coupled to cursor 40D to rotate about a rotation axis parallel or coinciding with the sliding axis X1 so as to assume at least a first angular position and a second angular position. In such case, the bag carrying device 10D preferably comprises a blocking system which is identical or substantially identical to the blocking system 24A, 41A, 42A of device 10A for selectively blocking the hooking member 20D at least in the first and in the second angular position. Cursor 40D preferably comprises a first portion 44D of cursor and a second portion 45D of cursor which are coupled to each other, for example screwed to each other, between which the retaining member 50D is interposed. According to one embodiment, the retaining member 50D is provided with a longitudinal opening 51D extended in the direction of the sliding axis X1 to allow the hooking member 20D to slide in the direction of said sliding axis X1. According to one embodiment, the blocking elements 60D, 70D comprise first blocking elements 60D associated with cursor 40D and second blocking elements 70D conjugated with the first blocking elements 60D. The second blocking elements 70D are interposed between the retaining member 50D and the mounting base 15D. According to one embodiment, the first blocking elements 60D are associated with cursor 40D and the second blocking elements 70D comprise at least one row 70D of blocking teeth 71D associated with the retaining member 50D. Alternatively, the at least one row of blocking teeth 70D may be associated with a first blocking member (not depicted in Figures 15 to 16) interposed between the retaining member 50D and the mounting base 15D. Such a first blocking member may be identical or similar to the first blocking member 72E which is described below (Fig. 19) with reference to a further embodiment of a bag carrying device according to the present invention. The second blocking elements preferably comprise a pair of parallel rows 70D between which cursor 40C is adapted to slide. The blocking teeth 71D protrude from the retaining member 50D or from the aforesaid first blocking member, when provided, towards the mounting base 15D. According to one embodiment, the first blocking elements 60D comprise a second blocking portion 60D which is elastically connected, preferably elastically hinged, to cursor 40D. The first blocking portion 60D is configured so as to engage the at least one row 70D of blocking teeth 71D to block the sliding of cursor 40D along the sliding axis X1. Moreover, the first blocking portion 60D is configured so as to be distanced from the at least one row 70D of blocking teeth 71D by pushing the second blocking portion 60D towards the mounting base 15D, contrasting with an elastic reaction of the second blocking portion 60D to disengage such a blocking portion 60D from said at least one row 70D of blocking teeth 71D and to allow the sliding of said cursor 40D along the sliding axis X1. Once released, i.e. once portion 60D has been disengaged from the blocking teeth 71D, cursor 40D may be caused to slide along axis X1 and may be blocked again in the desired position by releasing portion 60D so that the latter may engage the blocking teeth 71D again. In the case of the bag carrying device 10D, it is worth noting that unlike the bag carrying device 10A, cursor 40D may be blocked/released regardless of the angular position of the hooking member 20D.

With reference now to Figures 17 to 19, a bag carrying device for the motor vehicle 1 according to a fifth embodiment is indicated as a whole in such drawings with numeral 10E. The bag carrying device 10E comprises a hooking member 20E for a bag and coupling elements 30E adapted to be operatively interposed between the hooking member 20E and part 11 of the motor vehicle 1 for coupling the hooking member 20E to part 11 of the motor vehicle 1. According to a preferred embodiment, the hooking member 20E comprises a first hook portion 21E to allow hooking a bag to the hooking member 20E and a second safety portion 22E to avoid the bag from slipping off of the first portion 21E. The portions 21E, 22E, which have an identical or substantially identical shape with respect to the portions 21B, 22B of the hooking member 20B, similarly to the portions 21B, 22B, are adapted to assume a configuration in which they form a closed loop and they are relatively movable with respect to each other so as to allow opening the closed loop and hooking a bag to the hook portion 21E. The coupling elements 30E are configured so as to allow a position of the hooking member 20E to be regulated, so that the hooking member 20E can assume at least two different positions situated at different heights with respect to a bearing plane 12 of the motor vehicle 1. The coupling elements 30E comprise guide elements 40E, 50E configured to guide the hooking member 20E between said at least two different positions, and blocking elements 60E, 70E configured so as to prevent the hooking member 20E from moving between the aforesaid at least two different positions when the hooking member 20E assumes any one of such at least two different positions. The guide elements 40E, 50E are configured to guide the hooking member 20E between a plurality of different positions at different heights with respect to the bearing plane 12, and the blocking elements 60E, 70E configured so as to prevent the hooking member 20E from moving between the different positions of the aforesaid plurality of different positions when the hooking member 20E assumes any one position of such positions. The guide elements 40E, 50E are configured so as to guide the hooking member 20E along a sliding axis X1. The coupling elements 30E comprise a mounting base 15E configured to be fastened to part 11 of the motor vehicle 1. According to one embodiment, the guide elements 40E, 50E comprise a cursor 40E, coupled to which is the hooking member 20E, and a retaining member 50E coupled to said mounting base 15E so as to retain cursor 40E between the retaining member 50E and the mounting base 15E and so as to define a sliding guide to guide the sliding of cursor 40E along the sliding axis X1. According to one embodiment, the hooking member 20E is rotatably coupled to cursor 40E to rotate about a rotation axis parallel or coinciding with the sliding axis X1 so as to assume at least a first angular position and a second angular position. In such case, the bag carrying device 10E preferably comprises a blocking system which is identical or substantially identical to the blocking system 24A, 41A, 42A of device 10A for selectively blocking the hooking member 20E at least in the first and in the second angular position. Cursor 40E preferably comprises a first portion 44E of cursor and a second portion 45E of cursor which are coupled to each other, for example screwed to each other, between which the retaining member 50E is interposed. According to one embodiment, the retaining member 50E is provided with a longitudinal opening 51E extended in the direction of the sliding axis X1 to allow the hooking member 20E to slide in the direction of said sliding axis X1. According to one embodiment, the blocking elements 60E, 70E comprise first blocking elements 60E associated with cursor 40E and second blocking elements 70E conjugated with the first blocking elements 60E. The second blocking elements 70E are interposed between the retaining member 50E and the mounting base 15E. According to one embodiment, the first blocking elements 60E are associated with cursor 40E and the second blocking elements 70E comprise at least one row 70E of blocking teeth 71E associated with the first blocking member 72E interposed between the retaining member 50E and the mounting base 15E. Alternatively, the at least one row of blocking teeth 70E may be associated with the retaining member 50E. The second blocking elements 70E preferably comprise a pair of parallel rows 70E between which cursor 40E is adapted to slide. The blocking teeth 71E protrude from the first blocking member 72E, or from the retaining member 50E if the teeth 71E are directly associated with such a member 50E, towards the mounting base 15E. According to one embodiment, the first blocking elements 60E comprise a blocking crosspiece 61E and a release button 62E operatively connected to the blocking crosspiece 61E to operate the blocking crosspiece 61E. Moreover, the first blocking elements 60E comprise at least one elastic return element 63E operatively interposed between the blocking crosspiece 61E and the release button 62E. The first blocking elements 60E are configured so that the blocking crosspiece 61E engages the at least one row 70E of blocking teeth 71E associated with the retaining member 50E or with the first blocking member 72E to block the sliding of cursor 40E along the sliding axis X1. Moreover, the first blocking elements 60E are configured so that the blocking crosspiece 61E may be distanced from the at least one row 70E of blocking teeth 71E by pressing the release button 62E towards the mounting base 15E to disengage the blocking crosspiece 61E from the at least one row 70E of blocking teeth associated with the retaining member 50E or with the first blocking member 72E, and to allow the sliding of cursor 40E along the sliding axis X1. Once released, i.e. once the blocking crosspiece 61E has been disengaged from the blocking teeth 71E, cursor 40E may be caused to slide along axis X1 and may be blocked again in the desired position by releasing the release button 62E so that the blocking crosspiece 61E may engage the blocking teeth 71E again. In the case of the bag carrying device 10E, it is worth noting that unlike the bag carrying device 10A, cursor 40E may be blocked/released regardless of the angular position of the hooking member 20E.

According to that described above, it may be understood how a bag carrying device for a motor vehicle according to the present description is capable of achieving the objects mentioned above.

Indeed, a bag carrying device according to the present invention allows stably transporting bags of various sizes or having handles with different length due to the fact that it allows regulating the height of the hooking member with respect to a bearing plane of the motor vehicle.

The principle of the invention being understood, the embodiments and manufacturing details may largely vary with respect to that described and illustrated by mere way of non-limiting example, without departing from the scope of the invention as defined in the appended claims.

## Claims

1. A bag carrying device (10A-E) for a motor vehicle (1) comprising:
- a hooking member (20A) for a bag;
- coupling elements (30A) adapted to be operatively interposed between the hooking member (20A) and a part (11, 91) of said motor vehicle (1) for coupling the hooking member (20A) to said part (11, 91) of the motor vehicle (1), said coupling elements (30A) comprising:
- guide elements (40A, 50A) configured to guide the hooking member (20A) between at least two separate positions;
- blocking elements (60A, 70A) configured so as to prevent a movement of the hooking member (20A) between said at least two separate positions when the hooking member (20A) takes on any one of said at least two separate positions; and
- a mounting base (15A) configured to be fastened to said part (11) of the motor vehicle (1);
wherein the coupling elements (30A) are configured so as to allow a position of the hooking member (20A) to be regulated, so that the hooking member (20A) can assume said at least two different positions situated at different heights with respect to a bearing plane (12) of the motor vehicle (1);
wherein the guide elements (40A, 50A) comprise:
- a cursor (40A), coupled to which is the hooking member (20A); and **characterized by**
- a retaining member (50A) coupled to said mounting base (15A) so as to retain said cursor (40A) between the retaining member (50A) and the mounting base (15A), and so as to define a sliding guide to guide the sliding of said cursor (40A) along a sliding axis (X1):
wherein said blocking elements (60A, 70A) comprise:
- first blocking elements (60A) associated with the hooking member (20A); and
- second blocking elements (70A) conjugated with said first blocking elements (60A), said second blocking elements (70A) being interposed between the retaining member (50A) and the mounting base (15A);
wherein the second blocking members (70A) comprise at least one row (70A) of blocking teeth (71A) associated with the mounting base (15A), the blocking teeth (71A) of said at least one row (70A) protruding from the mounting base (15A) towards the retaining member (50A);
wherein the first blocking elements (60A) comprise at least one protruding blocking element (60A) which protrudes from the hooking member (20A), the hooking member (20A) being rotatably coupled to the cursor (40A) to rotate about a rotation axis parallel to or coinciding with said sliding axis (X1) so as to take on a first angular position and a second angular position, said at least one protruding blocking element (60A) being disengaged from said at least one row (70A) of blocking teeth (71A) in the first angular position so as to allow the sliding of the hooking member (20A) along said sliding axis (X1), said at least one protruding blocking element (60A) being engaged in said at least one row (70A) of blocking teeth (71A) in the second angular position so as to prevent the sliding of the hooking member (20A) along said sliding axis (X1).

2. A bag carrying device (10A) according to claim 1, wherein the retaining member (50A) is provided with a longitudinal opening (51A) extended in the direction of the sliding axis (X1) to allow the hooking member (20A) to slide in the direction of said sliding axis (X1).

3. A bag carrying device (10A-E) according to claim 1 or 2, wherein the hooking member (20A) is substantially parallel to said mounting base (15A) when said hooking member (20A) is in said first angular position, and the hooking member (20A) is substantially orthogonal to said mounting base (15A) when it is in said second angular position.

4. A bag carrying device (10A-E) according to claim 1 or 2, wherein said at least one protruding blocking element (60A) and said at least one row (70A0 of blocking teeth (71A) are shaped so as to be complementary.

5. A motor vehicle (1) comprising a bag carrying device (10A) according to any one of the preceding claims.

6. A motor vehicle (1) according to claim 5, comprising a bearing plane (12) arranged below the hooking member (20A) and said hooking member (20A) is attached to a substantially vertical part (11, 91) of the motor vehicle (1).

7. A motor vehicle (1) according to claim 6, wherein said bearing plane (12) is configured to accommodate a driver's feet when the motor vehicle (1) is in use.

8. A motor vehicle (1) according to claim 7, wherein said motor vehicle (1) is a scooter and said part (91) on which the bag carrying device (10A) is arranged, is a counter-shield (91) of said scooter.

## Patentansprüche

1. Taschentragevorrichtung (10A-E) für ein Kraftfahrzeug (1), umfassend:
- ein Hakenelement (20A) für eine Tasche;
- Kopplungselemente (30A), die angepasst sind, um operativ zwischen dem Hakenelement (20A) und einem Teil (11, 91) des Kraftfahrzeugs (1) eingefügt zu werden, um das Hakenelement (20A) mit dem Teil (11, 91) des Kraftfahrzeugs (1) zu koppeln, wobei die Kopplungselemente (30A) umfassen:
- Führungselemente (40A, 50A), die so konfiguriert sind, dass sie das Hakenelement (20A) zwischen mindestens zwei getrennten Positionen führen;
- Sperrelemente (60A, 70A), die so konfiguriert sind, dass sie eine Bewegung des Hakenelements (20A) zwischen den mindestens zwei getrennten Positionen verhindern, wenn das Hakenelement (20A) eine der mindestens zwei getrennten Positionen einnimmt; und
- eine Montagebasis (15A), die so konfiguriert ist, dass sie an dem Teil (11) des Kraftfahrzeugs (1) befestigt werden kann;
wobei die Kopplungselemente (30A) so konfiguriert sind, dass sie es erlauben, eine Position des Hakenelements (20A) zu regulieren, sodass das Hakenelement (20A) die mindestens zwei verschiedenen Positionen einnehmen kann, die in Bezug auf eine Lagerebene (12) des Kraftfahrzeugs (1) auf unterschiedlichen Höhen liegen;
wobei die Führungselemente (40A, 50A) umfassen:
- einen Positionsanzeiger (40A), an den das Hakenelement (20A) gekoppelt ist; und **gekennzeichnet durch**
- ein Rückhalteelement (50A), das mit der Montagebasis (15A) gekoppelt ist, um den Positionsanzeiger (40A) zwischen dem Rückhalteelement (50A) und der Montagebasis (15A) zurückzuhalten und um eine Gleitführung zu definieren, um das Gleiten des Positionsanzeigers (40A) entlang einer Gleitachse (X1) zu führen:
wobei die Sperrelemente (60A, 70A) umfassen:
- erste Sperrelemente (60A), die dem Hakenelement (20A) zugeordnet sind; und
- zweite Sperrelemente (70A), die mit den ersten Sperrelementen (60A) gepaart sind, wobei die zweiten Sperrelemente (70A) zwischen dem Rückhalteelement (50A) und der Montagebasis (15A) eingefügt sind;
wobei die zweiten Sperrelemente (70A) mindestens eine Reihe (70A) von Sperrzähnen (71A) umfassen, die der Montagebasis (15A) zugeordnet sind, wobei die Sperrzähne (71A) der mindestens einen Reihe (70A) von der Montagebasis (15A) in Richtung des Rückhalteelements (50A) vorstehen;
wobei die ersten Sperrelemente (60A) mindestens ein vorstehendes Sperrelement (60A) umfassen, das von dem Hakenelement (20A) vorsteht, wobei das Hakenelement (20A) drehbar mit dem Positionsanzeiger (40A) gekoppelt ist, um sich um eine Drehachse zu drehen, die parallel zu der Gleitachse (X1) verläuft oder mit dieser zusammenfällt, sodass es eine erste Winkelposition und eine zweite Winkelposition einnehmen kann, wobei das mindestens eine vorstehende Sperrelement (60A) in der ersten Winkelposition von der mindestens einen Reihe (70A) von Sperrzähnen (71A) gelöst ist, um das Gleiten des Hakenelements (20A) entlang der Gleitachse (X1) zu ermöglichen, wobei das mindestens eine vorstehende Sperrelement (60A) in der zweiten Winkelposition in die mindestens eine Reihe (70A) von Sperrzähnen (71A) eingreift, um das Gleiten des Hakenelements (20A) entlang der Gleitachse (X1) zu verhindern.

2. Taschentragevorrichtung (10A) gemäß Anspruch 1, wobei das Rückhalteelement (50A) mit einer Längsöffnung (51A) versehen ist, die sich in Richtung der Gleitachse (X1) erstreckt, damit das Hakenelement (20A) in Richtung der Gleitachse (X1) gleiten kann.

3. Taschentragevorrichtung (10A-E) gemäß Anspruch 1 oder 2, wobei das Hakenelement (20A) im Wesentlichen parallel zu der Montagebasis (15A) ist, wenn sich das Hakenelement (20A) in der ersten Winkelposition befindet, und das Hakenelement (20A) im Wesentlichen orthogonal zu der Montagebasis (15A) ist, wenn es sich in der zweiten Winkelposition befindet.

4. Taschentragevorrichtung (10A-E) gemäß Anspruch 1 oder 2, wobei das mindestens eine vorstehende Sperrelement (60A) und die mindestens eine Reihe (70A) von Sperrzähnen (71A) so geformt sind, dass sie komplementär sind.

5. Kraftfahrzeug (1) mit einer Taschentragevorrichtung (10A) gemäß einem der vorstehenden Ansprüche.

6. Kraftfahrzeug (1) gemäß Anspruch 5, umfassend eine Lagerebene (12), die unterhalb des Hakenelements (20A) angeordnet ist, und das Hakenelement (20A) ist an einem im Wesentlichen vertikalen Teil (11, 91) des Kraftfahrzeugs (1) befestigt.

7. Kraftfahrzeug (1) gemäß Anspruch 6, wobei die Lagerebene (12) so konfiguriert ist, dass sie die Füße eines Fahrers aufnimmt, wenn das Kraftfahrzeug (1) in Gebrauch ist.

8. Kraftfahrzeug (1) gemäß Anspruch 7, wobei das Kraftfahrzeug (1) ein Motorroller ist und das Teil (91), an dem die Taschentragevorrichtung (10A) angeordnet ist, ein Gegenschild (91) des Motorrollers ist.

## Revendications

1. Dispositif de transport de sac (10A-E) pour un véhicule à moteur (1) comprenant :
- un élément d'accrochage (20A) pour un sac ;
- des éléments d'accouplement (30A) adaptés pour être fonctionnellement interposés entre l'élément d'accrochage (20A) et une partie (11, 91) dudit véhicule à moteur (1) pour accoupler l'élément d'accrochage (20A) à ladite partie (11, 91) du véhicule à moteur (1), lesdits éléments d'accouplement (30A) comprenant :
- des éléments de guidage (40A, 50A) conçus pour guider l'élément d'accrochage (20A) entre au moins deux positions distinctes ;
- des éléments de blocage (60A, 70A) conçus pour empêcher un déplacement de l'élément d'accrochage (20A) entre lesdites au moins deux positions distinctes lorsque l'élément d'accrochage (20A) prend l'une quelconque desdites au moins deux positions distinctes ; et
- une base de montage (15A) conçue pour être fixée à ladite partie (11) du véhicule à moteur (1) ;
dans lequel les éléments d'accouplement (30A) sont conçus de manière à permettre de réguler une position de l'élément d'accrochage (20A), de sorte que l'élément d'accrochage (20A) puisse prendre lesdites au moins deux positions différentes situées à des hauteurs différentes par rapport à un plan d'appui (12) du véhicule à moteur (1) ;
dans lequel les éléments de guidage (40A, 50A) comprennent :
- un curseur (40A), auquel est accouplé l'élément d'accrochage (20A) ; et **caractérisé par**
- un élément de retenue (50A) accouplé à ladite base de montage (15A) de manière à retenir ledit curseur (40A) entre l'élément de retenue (50A) et la base de montage (15A) et de manière à définir un guide coulissant pour guider le coulissement dudit curseur (40A) selon un axe de coulissement (X1) :
dans lequel lesdits éléments de blocage (60A, 70A) comprennent :
- des premiers éléments de blocage (60A) associés à l'élément d'accrochage (20A) ; et
- des seconds éléments de blocage (70A) conjugués auxdits premiers éléments de blocage (60A), lesdits seconds éléments de blocage (70A) étant interposés entre l'élément de retenue (50A) et la base de montage (15A) ;
dans lequel les seconds éléments de blocage (70A) comprennent au moins une rangée (70A) de dents de blocage (71A) associées à la base de montage (15A), les dents de blocage (71A) de ladite au moins une rangée (70A) faisant saillie de la base de montage (15A) vers l'élément de retenue (50A) ;
dans lequel les premiers éléments de blocage (60A) comprennent au moins un élément de blocage en saillie (60A) qui fait saillie de l'élément d'accrochage (20A), l'élément d'accrochage (20A) étant accouplé de manière rotative au curseur (40A) pour tourner autour d'un axe de rotation parallèle audit axe de coulissement (X1) ou coïncidant avec celui-ci, de manière à prendre une première position angulaire et une seconde position angulaire, ledit au moins un élément de blocage en saillie (60A) étant dégagé de ladite au moins une rangée (70A) de dents de blocage (71A) dans la première position angulaire de manière à permettre le coulissement de l'élément d'accrochage (20A) le long dudit axe de coulissement (X1), ledit au moins un élément de blocage en saillie (60A) étant engagé dans ladite au moins une rangée (70A) de dents de blocage (71A) dans la seconde position angulaire de manière à empêcher le coulissement de l'élément d'accrochage (20A) le long dudit axe de coulissement (X1).

2. Dispositif de transport de sac (10A) selon la revendication 1, dans lequel l'élément de retenue (50A) est pourvu d'une ouverture longitudinale (51A) prolongée dans la direction de l'axe de coulissement (X1) pour permettre à l'élément d'accrochage (20A) de coulisser dans la direction dudit axe de coulissement (X1).

3. Dispositif de transport de sac (10A-E) selon la revendication 1 ou 2, dans lequel l'élément d'accrochage (20A) est sensiblement parallèle à ladite base de montage (15A) lorsque ledit élément d'accrochage (20A) se trouve dans ladite première position angulaire et l'élément d'accrochage (20A) est sensiblement orthogonal à ladite base de montage (15A) lorsqu'il se trouve dans ladite seconde position angulaire.

4. Dispositif de transport de sac (10A-E) selon la revendication 1 ou 2, dans lequel ledit au moins un élément de blocage en saillie (60A) et ladite au moins une rangée (70A) de dents de blocage (71A) sont conformées de manière à être complémentaires.

5. Véhicule à moteur (1) comprenant un dispositif de transport de sac (10A) selon l'une quelconque des revendications précédentes.

6. Véhicule à moteur (1) selon la revendication 5, comprenant un plan d'appui (12) disposé en dessous de l'élément d'accrochage (20A) et ledit élément d'accrochage (20A) est fixé à une partie sensiblement verticale (11, 91) du véhicule à moteur (1).

7. Véhicule à moteur (1) selon la revendication 6, dans lequel ledit plan d'appui (12) est conçu pour recevoir les pieds d'un conducteur lorsque le véhicule à moteur (1) est en cours d'utilisation.

8. Véhicule à moteur (1) selon la revendication 7, dans lequel ledit véhicule à moteur (1) est un scooter et ladite partie (91) sur laquelle est disposé le dispositif de transport de sac (10A) est un contre-bouclier (91) dudit scooter.
